# EUROPÄISCHE PATENTSCHRIFT

(11) **EP 1 428 408 B1**
(45) Veröffentlichungstag und Bekanntmachung des Hinweises auf die Patenterteilung: **24.11.2010**
(21) Anmeldenummer: 02776701.1
(22) Anmeldetag: 20.09.2002
(51) Int. Cl.: H04Q 11/04, H04L 12/56

(54) **VERTEILTE ÜBERMITTLUNG VON INFORMATIONEN IN EINEM VERBINDUNGSLOSEN, PAKETORIENTIERTEN KOMMUNIKATIONSNETZ**
DATA TRANSMISSION IN A PACKET-ORIENTED COMMUNICATION NETWORK
TRANSMISSION D'INFORMATIONS DANS UN RESEAU DE COMMUNICATION ORIENTE PAQUETS

(30) Priorität: 20.09.2001 DE 10146349; 04.10.2001 DE 10148893; 14.12.2001 DE 10161508; 14.12.2001 DE 10161546; 14.12.2001 DE 10161547
(43) Veröffentlichungstag der Anmeldung: 16.06.2004
(73) Patentinhaber: Nokia Siemens Networks GmbH & Co. KG, 81541 München (DE)
(72) Erfinder: SCHRODI, Karl, 82538 Geretsried (DE)
(86) Internationale Anmeldenummer: PCT/DE2002/003584
(87) Internationale Veröffentlichungsnummer: WO 2003/026341

(56) Entgegenhaltungen:
- EP-A- 1 119 216
- EP-A- 1 133 112
- DE-A- 19 923 245
- US-A- 5 953 337

## Beschreibung

Der Gegenstand der Anmeldung liegt u.a. auch auf dem Gebiet von einheitlichen Netzen für den zuverlässigen Transport digital kodierter Information für Daten-, Sprach-, Audio-/Video- und andere -Dienste und -Anwendungen unter Einhaltung entsprechender dienst- bzw. anwendungsspezifischer Quality of Service Anforderungen bis hin zur interaktiven Echtzeitkommunikation. Die Patentanmeldungen DE 10146349.9, DE 10161508.6, DE 10161546.9, DE 10161547.7 liegen auch auf diesem Gebiet.

In der Vergangenheit haben sich zwei wesentliche Typen von Kommunikationsnetzen zur Übermittlung von in Verkehrsströme eingebetteten Informationen herausgebildet: Paketorientierte Datennetze und leitungsorientierte Sprachnetze. Sie unterschieden sich u.a. durch ihre unterschiedlichen Quality of Service (QoS) Anforderungen.

Quality of Service - auch Dienstgüte genannt - wird je nach Kontext unterschiedlich definiert und in der Folge mit jeweils unterschiedlichen Metriken bewertet. Bekannte Beispiele für Metriken zur Messung von Dienstgüte sind die maximal übermittelbare Anzahl von Informationen (Bandwidth), die Anzahl der übermittelten Informationen, die Anzahl der nicht übermittelten Informationen (Loss Rate), die - ggf. gemittelte - zeitliche Verzögerung bei der Übermittlung ((Transmission) Delay), die - ggf. gemittelte - Abweichung vom ansonsten üblichen Abstand zwischen je zwei Informationsübermittlungen (Delay Jitter, Interarrival Jitter), oder die Anzahl der erst gar nicht zur Übermittlung zugelassenen Informationen (Blocking Rate).

Dienste werden in multimedialen Netzen auch 'Multimediaanwendungen' genannt. Unter einem multimedialen Netz versteht man hierbei ein Netz, in dem eine Mehrzahl von unterschiedlichen Diensten realisiert ist. Im engeren Sinn versteht man hierunter insbesondere ein breitbandiges, dienstintegriertes Netz (B-ISDN = Broadband Integrated Services Digital Network), in dem die sich bei Nutzung der Dienste ergebenden Verkehrsströme mit einem einheitlichen, vorzugsweise paketorientierten Transportmechanismus übermittelt werden können. Unter den Begriff Multimediaanwendung fallen dabei sowohl Dienste wie gewöhnliche Telefonie (in paketorientierten IP Netzen auch 'Voice over IP (VoIP)' genannt), als auch Dienste wie Fax, Telefonkonferenz, Videokonferenz, Video on Demand (VoD) und ähnliches mehr.

Leitungsorientierte (Sprach-) Netze sind auf die Übermittlung von Verkehrsströmen ausgelegt, in denen kontinuierlich strömende (Sprach-) Informationen eingebettet sind. In der Fachwelt werden sie auch als 'Gespräch', 'Call' oder 'Session' bezeichnet. Die Übermittlung der Informationen erfolgt hierbei üblicherweise mit hoher Dienstgüte und Sicherheit. Beispielsweise ist für Sprache eine minimale - z.B. < 200 ms - Verzögerung (Delay) ohne Schwankungen der Verzögerungszeit (Delay-Jitter) wichtig, da Sprache bei Wiedergabe im Empfangsgerät einen kontinuierlichen Informationsfluss erfordert. Ein Informationsverlust kann deshalb nicht durch ein nochmaliges Übermitteln der nicht übermittelten Information ausgeglichen werden und führt im Empfangsgerät üblicherweise zu einem akustisch wahrnehmbaren Knacksen. In der Fachwelt wird die Übermittlung von Sprache verallgemeinert auch als 'Echtzeit-(Übermittlungs-)Dienst' bzw. als 'Realtime-Service' bezeichnet.

Eine niedrige Blocking Rate wird z.B. durch entsprechende Dimensionierung und Planung der Sprachnetze erreicht. Ein niedriger und weitgehend konstanter Delay bzw. Delay Jitter wird bei gemeinsamer Übermittlung von mehreren Verkehrsströmen über einen gemeinsamen Kanal üblicherweise durch Einsatz eines statischen (Zeit-) Multiplex - auch TDM (Time Devision Multiplex) genannt - bewirkt. Hierbei werden die Verkehrsströme im Sender in homogene Einheiten fester Länge - auch Zeitscheiben bzw. Timeslots genannt - segmentiert und zeitlich ineinander verschachtelt übermittelt. Die Zuordnung der Timeslots zu den jeweiligen Verkehrsströmen wird durch deren Position innerhalb des Kanals angezeigt. Nach der gemeinsamen Übermittlung können so im Empfänger die Zeitscheiben ihren zugehörigen Verkehrsströmen zugeordnet und bei Bedarf auch wieder in die ursprünglichen Verkehrsströme zusammengesetzt (reassembliert) werden. Als Folge unterliegt die Übermittlungskapazität der Verkehrsströme bei leitungsorientierter Übermittlung grds. keinen Schwankungen, sondern ist auf einen vorgegeben Wert (z.B. 64 kbps bei zeitgemäßen ISDN Telephonnetzen) festgeschrieben.

Paketorientierte (Daten-) Netze sind auf die Übermittlung von als Paketströme ausgebildeten Verkehrsströmen ausgelegt, die in der Fachwelt auch als 'Datenpaketströme' bezeichnet werden. Hierbei muss üblicherweise keine hohe Dienstgüte garantiert werden. Beispielsweise ist für eine eMail keine minimale Verzögerung (Delay) ohne Schwankungen der Verzögerungszeit (Delay-Jitter) erforderlich, da eine eMail bei Empfänger nicht in Echtzeit wiedergegeben werden muss. Wichtig ist hier eher eine fehlerfreie Übermittlung der eMail. Ein Informationsverlust wird deshalb üblicherweise durch ein nochmaliges Übermitteln (Retransmission) von nicht oder fehlerhaft übermittelten Information ausgeglichen. Der Delay einer eMail variiert folglich je nach der Häufigkeit von Retransmission Übermittlungen. Auch der Delay Jitter ist folglich eher hoch. In der Fachwelt wird die Übermittlung von Daten deshalb auch als Übermittlungsdienst ohne Echtzeitbedingungen bzw. als 'Non-Realtime-Service' bezeichnet.

Eine Blocking Rate gibt es in paketorientierten Datennetzen zunächst nicht. Im Prinzip werden immer alle Pakete aller Verkehrsströme übermittelt. Die Übermittlung der Verkehrsströme erfolgt jedoch schon bei moderater Auslastung eines Datennetzes mit zeitlichen signifikant schwankenden Verzögerungen, da die einzelnen Pakete üblicherweise in der Reihenfolge ihres Netzzugangs übermittelt werden, d.h. die zeitlichen Verzögerungen werden umso größer, je mehr Pakete von einem Datennetz zu übermitteln sind. Eine gemeinsame Übermittlung von mehreren Verkehrsströmen über einen gemeinsamen Kanal wird üblicherweise durch Einsatz eines statistischen (Zeit-) Multiplex bewirkt. Hierbei werden die Pakete der Verkehrsströme im Sender nach statistischen Regeln zeitlich ineinander verschachtelt übermittelt. Die Regel könnte z.B. vorschreiben, dass die Pakete in der Reihenfolge ihres Eintreffens übermittelt werden (Best Effort). Bei gleichzeitigem Eintreffen mehrerer Pakete wird eines übermittelt, während der Rest - mit der Folge eines erhöhten Delay Jitters - kurzzeitig zwischengespeichert (gepuffert) wird. Treffen mehr Pakete gleichzeitig ein, als gepuffert werden können, so werden die überzähligen Pakete verworfen. Die Zuordnung der Pakete zu den jeweiligen Verkehrsströmen wird durch eine Zuordnungsinformation im Overhead (bestehend aus Header [Kopfteil] und/oder Trailer) der Pakete angezeigt. Nach der gemeinsamen Übermittlung können so im Empfänger die Pakete ihren zugehörigen Verkehrsströmen zugeordnet werden. Die Übermittlungskapazität der Verkehrsströme unterliegt bei paketorientierter Übermittlung grds. keinen Beschränkungen, sondern kann prinzipiell (im Rahmen der Kapazität des gemeinsamen Kanals) zu jedem Zeitpunkt einen unterschiedlichen, beliebigen Wert aufweisen.

Im Zuge der Konvergenz von leitungsorientierten Sprach- und paketorientierten Datennetzen werden Sprachübermittlungsdienste und zukünftig auch breitbandigere Dienste wie z.B. Übermittlung von Bewegtbildinformationen (VoD, Videokonferenz), in dienstintegrierten paketorientierten (Multimedia-) Netzen - auch 'Sprach-Daten-Netz' genannt - realisiert, d.h. die Übermittlung der bisher üblicherweise leitungsorientiert übermittelten Echtzeitdienste erfolgt in einem konvergenten Sprach-Daten-Netz in Paketströmen. Diese werden auch 'Echtzeitpaketströme' genannt. Hierbei ergibt sich das Problem, dass für eine paketorientierte Realisierung eines Echtzeitdienstes eine hohe Dienstgüte und Sicherheit erforderlich ist, damit diese mit einer leitungsorientierten Übermittlung qualitativ vergleichbar ist, während zeitgemäße (paketorientierte) Datennetze und insb. das Internet keine adäquaten Mechanismen zur Garantie einer hohen Dienstgüte vorsehen.

Anforderungen an die Dienstgüte in dienstintegrierten, paketorientierten Netzen gelten allgemein für alle Netztypen. Sie sind unabhängig von der konkreten Ausgestaltung der Paketorientierung. Die Pakete können folglich als Internet-, X.25- oder Frame-Relay-Pakete, aber auch als ATM-Zellen ausgebildet sein. Sie werden zuweilen auch als 'Nachrichten' bezeichnet, v.a. dann, wenn eine Nachricht in einem Paket übermittelt wird. Datenpaketströme und Echtzeitpaketströme sind hierbei Ausführungsbeispiele von in Kommunikationsnetzen übermittelten Verkehrsströmen. Verkehrsströme werden auch als 'Verbindungen' bezeichnet, und zwar auch in paketorientierten Netzen, in denen eine verbindungslose Übermittlungs-Technik zum Einsatz kommt. Beispielsweise erfolgen Informationsübermittlung bei TCP/IP mit Hilfe von sog. Flows, durch die Sender und Empfänger (z.B. Web Server und Browser) trotz des verbindungslosen Charakters von IP auf logisch abstrakter Ebene miteinander verbunden werden, d.h. logisch abstrahiert stellen auch Flows Verbindungen dar. Allein entscheidend für eine Verbindung ist, dass vor der Übermittlung ein Verbindungsaufbau stattfindet, bei dem ein Kontext geschaffen wird, der zumindest während der Übermittlung besteht. Nach der Übermittlung kann ein expliziter Verbindungsabbau erfolgen. Es sind aber auch implizite Mechanismen wie z.B. ein Time Out der Verbindung nach einer festgelegten übermittlungsfreien Zeitspanne möglich.

Das zur Zeit bekannteste Datennetz ist das Internet. Das Internet ist als offenes (Weitverkehrs-) Datennetz mit offenen Schnittstellen zur Verbindung von (zumeist lokalen und regionalen) Datennetzen unterschiedlicher Hersteller konzipiert. Das Hauptaugenmerk liegt deshalb bisher auf der Bereitstellung einer herstellerunabhängigen Transportplattform. Adäquate Mechanismen zur Garantie von Dienstgüte spielen eine nebengeordnete Rolle und sind deshalb noch kaum vorhanden.

Die Konvergenz von Telekommunikation (auch Sprachnetze genannt) und klassischer Datenwelt (auch Datennetze genannt) hin zu IP (Internet Protokoll) basierten Netzen und Diensten ist in Bezug auf die IP Technik eine schwierige Aufgabe, da diese als paketorientiertes Datennetz vor allem auf 'Best Effort' Übertragung ausgelegt ist und allenfalls die Einhaltung eher vage gehaltener 'Service Level Agreements' (SLA) vorsieht, während bei der Telekommunikation sehr stringente Anforderungen in Bezug auf die QoS, Zuverlässigkeit, Verfügbarkeit und Sicherheit von Netz und Diensten im Vordergrund stehen. Die 'Internet-Welt' reagiert auf diese Aufgabe mit einer Vielzahl von zunehmend komplexeren und aufwändigeren Lösungsansätzen, hat aber bisher noch keine vollständige Lösung gefunden, die auch in wirtschaftlicher Hinsicht handhabbar und tragfähig ist.

Die QoS Anforderungen eines Dienstes oder einer Anwendung an ein Netz können über verschiedene Kriterien definiert werden, von denen einige beispielhaft genannt seien:
- die Durchsatzcharakteristik der digital kodierten Information, d.h. die erforderliche Bandbreite bzw. Bandbreitencharakteristik (feste Bandbreite, variable Bandbreite [z.B. mit Mittelwert, Spitzenwert, 'Burstiness-Faktor' oder weiteren charakterisierenden Parametern]) und die Empfindlichkeit gegenüber Informationsverlusten,
- die Verzögerungscharakteristik, d.h. die Auswirkungen einer absoluten Verzögerung (Laufzeit von der Quelle bis zur Senke der Information) und die Empfindlichkeit gegen Laufzeit- bzw. Verzögerungsschwankungen (selbstverständlich können Verzögerungsschwankungen durch 'Auspuffern' in absolute Verzögerung umgesetzt werden - dies ist jedoch meist sehr aufwändig),
- die erforderliche oder nicht erforderliche zeitliche Konsistenz bzw. 'Zeitinvarianz' der übertragenen Information, d.h. ob die Informationseinheiten in exakt derselben Reihenfolge abgeliefert werden müssen, in der sie angeliefert wurden, oder nicht (ggf. muss die Fähigkeit - oder Unfähigkeit - höherer Dienste- und Anwendungsschichten mit in Betracht gezogen werden).

Die Konsequenzen, die sich aus unterschiedlichen QoS Anforderungen ergeben, seien anhand von zwei Beispielen verdeutlicht:
I. Unidirektional gerichtete Audio-/Video-Anwendungen (z.B. 'Streaming Video') erfordern zwar eine Echtzeit-Präsentation beim Empfänger, in den meisten Fällen wird es aber unerheblich sein, ob die absolute Verzögerung nun 1/100, 1 oder 5 Sekunden beträgt, sofern nach dem Beginn der Ausspielung die Kontinuität gegeben ist. Diese Verzögerungstoleranz könnte z.B. genutzt werden, um mit Hilfe von Wiederholungen Informationsverluste auszugleichen und dadurch die Qualität zu verbessern. Alternativ könnte auch mit Redundanz übertragen werden (höhere Bandbreite), um dadurch mögliche Datenverluste auszugleichen.
II. Interaktive, d.h. bidirektionale Echtzeitkommunikation (Sprache, Video, ...) zwischen Personen muss auf das Reaktionsvermögen und das typische Kommunikations- und Dialogverhalten von Menschen Rücksicht nehmen. Hier muss die absolute Verzögerung (und damit natürlich auch die Verzögerungsschwankungen) auf wenige hundert Millisekunden (z.B. 200 ms) limitiert werden. Andererseits sind dabei u.U. etwas höhere Verlustraten tolerierbar, da die Fähigkeit des menschlichen Gehirns zur 'Glättung von Unebenheiten' in Sprache und visueller Wahrnehmung sehr ausgeprägt ist und im Dialog die Aufmerksamkeit für kleine Mängel eher etwas reduziert ist. Komplexer sind jedoch Echtzeit-Dialoge zwischen Maschinen. Dann muss unter Umständen sowohl auf die Vollständigkeit der Information als auch auf geringe Verzögerungen bis nahe an die physikalische Grenze aufgrund der räumlichen Distanz (Laufzeit ca. 5 ms pro 1000 km Entfernung) gezielt werden.

Sind die QoS Anforderungen definiert, so kann ein Netz, sofern es in einem dieser Bereiche noch Reserven hat, diese durchaus auch dazu einsetzen, um Defizite in einem anderen Bereich zu kompensieren. Diese Kompensation sei anhand von zwei Beispielen erläutert:
I. Toleriert eine Anwendung relativ hohe Informationsverluste, so können die Verzögerungsschwankungen dadurch verkleinert werden, dass Informationseinheiten, die eine hohe Verzögerung erhalten haben, verworfen werden. Umgekehrt können größere Verzögerungsschwankungen natürlich auch zur Erreichung niedrigerer Verluste eingesetzt werden, was jedoch zu großen Pufferspeichern führt.
II. Liegt das Maximum der Verzögerungsschwankungen unterhalb des minimalen zeitlichen Abstandes der angelieferten Informationseinheiten (sog. 'schnelles Netz'), so können Probleme mit der zeitlichen Konsistenz der übertragenen Information ausgeschlossen werden. Sind Maßnahmen zur Wiederherstellung dieser zeitlichen Konsistenz vorgesehen, so können relativ große Verzögerungsschwankungen toleriert werden, solange der Rahmen der absolut zulässigen Verzögerung nicht überschritten wird.

Neben der QoS ist auch die generelle Verfügbarkeit der Dienste ein wesentlicher Parameter, der in hohem Maße vom Netz und seinen Eigenschaften abhängig ist. Steht im Fehlerfall, z.B. beim Ausfall einzelner Netzkomponenten oder Verbindungsleitungen, ein Ersatzweg zur Verfügung und wie schnell kann dieser nutzbar gemacht werden? Treten für den Anwender erkennbare Unterbrechungen auf und wie lange dauern diese? Muss ggf. der Netzbetreiber oder gar der Anwender selbst in irgendeiner Form eingreifen, um den Dienst wiederherzustellen? Die Zuverlässigkeit des Netzes an sich und die Art und Weise, wie es zur Überbrückung von Fehlerfällen und ggf. zur Wiederherstellung der Anwendungen beitragen kann, ist dabei von großer Bedeutung.

Ein einheitliches Netz muss also mit Randbedingungen der hier vorgestellten Art qualifiziert betrachtet werden - und natürlich soll es auch möglichst effizient, d.h. mit mögl. geringem Aufwand und wirtschaftlich vorteilhaft gelöst werden.

Die bekannten Netztechniken erfüllen die vorgenannten Anforderungen allenfalls teilweise.
1) Der einfachste Ansatz ist die bewährte Technik der Leitungsvermittlung, bei der für jede Kommunikationsbeziehung eine (im bidirektionalen Fall bzw. bei Mehrfachbeziehungen ggf. auch zwei oder mehr) dedizierte Verbindung (zuweilen etwas salopp auch als 'Pfad' bezeichnet) mit fest zugeordneter und absolut reservierter Bandbreite geschaltet wird. Solche Verbindungen sind entweder explizit als individuelle physikalische Leitungen (z.B. Kupferdrähte) oder als (virtuelle) Kanäle in sog. Übertragungs- oder Vermittlungssystemen, die eine mehrfache Ausnutzung physikalischer Leitungen erlauben, ausgebildet. Auch eine Mischung mit unterschiedlich realisierten Teilstrecken ist möglich. Der mögliche Datendurchsatz einer solchen Verbindung ist durch die ihr eigene bzw. zugeteilte Bandbreite bestimmt, die Verzögerungszeit für den Transport setzt sich aus dem 'Propagation Delay', d.h. der entfernungsabhängigen Laufzeit auf der Leitung, und den 'Switching Delays' zusammen, d.h. den inhärenten Bearbeitungszeiten die beim 'Vermitteln' der digital kodierten Information ('Daten') in den Netzknoten (Switches) entstehen. 'Vermitteln' bedeutet hier das Umsetzen der Information ('Daten') von einer bestimmten ankommenden Leitung/Kanal auf eine beim Aufbau der Verbindung festgelegte abgehende Leitung/Kanal. Beide Delay-Komponenten können in der Regel (d.h. bei störungsfreiem Betrieb der Systeme) für die Dauer einer Kommunikationsbeziehung (bei durchgeschaltetem Pfad bzw. bestehender 'Verbindung') als konstant angenommen werden. Im störungsfreien Fall ist damit für alle Anwendungen dieselbe quasi 'optimale' QoS vorgegeben und erzielbar (keine Informationsverluste, konstante, in der Regel relativ geringe Verzögerung, keine Vertauschungen). Dafür muss aber die Verbindung für die Dauer der Kommunikationsbeziehung permanent geschaltet (und reserviert) sein, auch dann, wenn die Anwendung sie nur sehr wenig (z.B. nur sporadisch) nutzt. Die Zuverlässigkeit/Verfügbarkeit kann dadurch verbessert werden, dass im Fehlerfall möglichst rasch auf eine vorab bereitgestellten, alternative Verbindung umgeschaltet wird (doppelte Kapazität erforderlich) oder das eine Ersatzverbindung umgehend geschaltet wird (Verzögerung und Aufwand, vor allem dann, wenn durch einen Ausfall viele Verbindungen gleichzeitig betroffen sind).
2) Die Paketvermittlungstechnik zielt auf eine bessere Nutzung der Resourcen (Bandbreite) durch eine flexible, gemeinsame Benutzung (sharing) von Leitungen und (ggf. virtuellen) Kanälen bzw. Vermittlungs- und Übertragungsmedien durch mehrere Kommunikationsbeziehungen. Bekannte, zeitgemäße Vertreter sind z.B. die verbindungsorientierte ATM-Technik mit Paketen fester Länge (auch 'Zellen' genannt) und die verbindungslose IP-Technik mit Paketen variabler Länge.
   A) Die ATM Technik wird auch bei der ITU-T unter diesem Begriff und mit dem Ziel eines 'Breitband-ISDN' (B-ISDN) vorangetrieben. ATM hat Mechanismen, um auch bei sehr knappen Resourcen (verfügbaren Bandbreiten) ein breites Spektrum von Service-Klassen mit definierter und (im statistischen Mittel) garantierter QoS bereitzustellen. Die resultierenden Systeme und Netze sind als Konsequenz jedoch komplex und aufwändig.
      Dimensionierung und Betrieb erfordern hochqualifiziertes Fachpersonal. ATM arbeitet verbindungsorientiert, mit einem Netz von 'virtuellen' Pfaden und Kanälen, die einander hierarchisch zugeordnet sind. Für eine Vielzahl unterschiedlicher Dienste-Klassen können Bandbreiten verbindungsindividuell reserviert und nach Maßgabe der zugrundegelegten Verkehrsstatistik auch 'garantiert' werden. Dazu werden unterschiedliche Queueing und Scheduling Mechanismen eingesetzt, die in jedem Knoten pro Pfad und Kanal (Verbindung) durch entsprechende Parameter eingestellt werden. Durch feingranulare Dimensionierungs- und Verbindungsakzeptanzvorschriften können nach Maßgabe statistischer Regeln Informationsverluste und die variablen Anteile der Switching-Delays (diese sind im wesentlichen bestimmt durch das Queueing) begrenzt werden.
      Eine Vertauschung von Informationseinheiten ist aufgrund der Verbindungsorientierung im störungsfreien Betrieb nicht zu erwarten. Als Folge der Verbindungsorientierung sind bei der Behandlung von Fehlerfällen alle inhärenten Mechanismen erneut zu durchlaufen. Die Grundideen sind dabei denen der Leitungsvermittlungstechnik oft sehr ähnlich.
   B) Die IP Technik ist ein eher pragmatischer Ansatz, der sich aufgrund seiner einfachen Basismechanismen in der Datenwelt durchgesetzt hat. Sie hat in den letzten Jahren massive Fortschritte gemacht, so dass darauf basierende Systeme und Netze in Bezug auf ihre Leistungsfähigkeit (Datendurchsatz, Steuerungseffizienz) mit auf der ATM Technik basierenden Systemen vergleichbar sind. Der Erfolg der IP Technik beruht signifikant darauf, dass ein großer Teil der Dienste und Anwendungen bereits im Endgerät auf paketorientierte Internet-Protokolle (IP) aufsetzt. Es wird zur Zeit prognostiziert, dass das Wachstum bei den IP basierten Diensten auch für die Zukunft um ein Vielfaches größer sein wird als das bei anderen Technologien, weshalb eine weitgehende Migration aller Dienste hin zum Transport über IP basierte Netze wahrscheinlich erscheint. Im Gegensatz zu ATM Netzen arbeiten IP Netze verbindungslos und realisieren lediglich einen 'Best Effort' Service, mit dem auch bei großzügiger Dimensionierung der Netze kaum Vorhersagen und schon gar keine Garantien für eine erreichbare QoS möglich sind.
   C) Darüber hinaus sind bisher die folgenden Lösungsansätze bekannt:
      a) Man verwende ein ATM Netz als Core Netz. Edge Devices setzen die IP Datenflüsse in ATM Verbindungen geeigneter Service-Klassen um und der Transport erfolgt in entsprechenden Verbindungen im ATM Netz. Problematisch sind Skalierbarkeit, Komplexität und Aufwand für Einrichten und Betrieb (s.o., ATM Technik). Diese Lösung hilft eher im Core. Bei (zusätzlicher) Anwendung im Access gelten dieselben Nachteile. Eine Alternative im Access stellt die nachfolgende Lösung dar.
      b) Man verwende ein Signalisierungsprotokoll und baue über das IP Netz Verbindungen mit reservierten Bandbreiten auf (Integrated Services - IntServ, RSVP). Dieser Lösungsansatz ist prinzipiell sowohl End-to-End (E2E), d.h. von Endgerät zu Endgerät, als auch auf Teilabschnitten möglich. Er kann pro Kommunikationsfluss oder (im Core) auch für aggregierte Kommunikationsflüsse angewendet werden. Er ist jedoch umständlich, aufwändig, nicht skalierend (Steuerungsaufwand) und ineffizient, d.h. der ATM Technik sehr ähnlich.
      c) MPLS: Dieser Ansatz lehnt sich an die ATM Technik an. Es werden Pfade (Verbindungen) im Netz aufgesetzt, über die der Verkehr einzelner (in der Regel aggregierter) Flows gezielt geroutet wird. Er wird für QoS häufig in Verbindung mit RSVP und DiffServ (siehe nachfolgend unter Punkt d) vorgeschlagen und kann auch auf Basis eines ATM Transports realisiert werden. Er fällt in die Komplexität verbindungsorientierter Mechanismen mit allen bereits aufgeführten Konsequenzen (von Bandbreitenkontrolle bis zum Überwachen des Vorhandenseins der Verbindung) zurück, d.h. die Komplexität ist ähnlich wie bei der ATM Technik. Er soll in Verbindung mit dem DiffServ Lösungsansatz vor allem die dort angesprochene Problematik mildern (gezielte Verkehrssteuerung über Pfade).
      d) Differentiated Services (DiffServ)': Die Datenpakete werden im Edge Device aufgrund ihrer Zugehörigkeit zu bestimmten Diensten, Anwendungen oder Kommunikationsbeziehungen etc. klassifiziert und markiert. Zusätzlich kann bzw. sollte eine (flow-bezogene) Zugangskontrolle und -überwachung (z.B. auf Verfügbarkeit von Ressourcen und Einhaltung der angemeldeten Bandbreiten- und QoS-Charakteristik) erfolgen. Die Pakete folgen dann der durch ihre Paketkopfinformation (z.B. Destination Adresse) und die Routing Protokolle vorgegebenen Route durch das Netz, wobei sie in jedem Knoten gemäß ihrer Markierung mit einem entsprechenden 'Per Hop Behaviour' behandelt (z.B. priorisiert) werden. Der DiffServ Ansatz lässt die Freiheit des Per Hop Behaviour innerhalb einer 'Single Routing Domain', z.B. dem (Sub-) Netz eines Betreibers, erfordert aber eine komplette 'Edge' Behandlung zwischen solchen Domänen (Subnetzen). Der DiffServ Ansatz kann temporäre und/oder lokale Engpässe nicht verhindern, da in der Regel keine Berücksichtigung bzw. Abstimmung mit den durch die Routing Protokolle vorgegebenen Routen erfolgt. In der Regel werden Pakete mit dem gleichen Ziel von dem Moment an, in dem sie in einem Knoten zusammentreffen, derselben eingestellten Route folgen. Dies kann erheblich Schieflasten und Engpässe in den Netzen mit entsprechend großen (Queueing-) Verzögerungen bis hin zu Paketverlusten zur Folge haben. Das Engineering der Netze und Routen ist weiterhin eine komplexe Aufgabe, wobei der Aspekt der Zuverlässigkeit und Verfügbarkeit (z.B. Umrouten im Fehlerfall) erschwerend hinzukommt.
   D) Prinzipiell sind auch nahezu alle Kombinationen zwischen diesen Ansätzen denkbar und zum großen Teil auch schon diskutiert worden. Allen diesen Ansätzen ist gemeinsam, dass sie (mit Ausnahme von DiffServ) grundsätzlich auf Pfaden und von entlang der Pfade reservierten Bandbreiten und ggf. weiteren Resourcen aufsetzen. Selbst ein reiner DiffServ Ansatz setzt immer noch zumindest auf durch Routing-Protokolle vorgegebenen Routen auf. Damit verbunden ist in der Regel ein großer administrativer Aufwand für das Vorbereiten und das (statische) Einrichten von Pfaden und Routen im Netz bzw. ein entsprechend hoher Steuerungsaufwand für das dynamische Auswählen und Schalten der Wege. Weiterhin müssen in jedem Netzknoten Speichereinrichtungen für das Halten von pfad- und verbindungspezifischen Informationen vorgehalten werden, die im Fehlerfall verloren gehen können bzw. auf andere Wege umkonfiguriert werden müssen. Selbst beim reinen DiffServ Ansatz folgt der Verkehr den durch die Routing Protokolle vorbestimmten Routen, die deshalb sehr sorgfältig dimensioniert und überwacht werden müssen. In der Regel sind jedoch weder alle Schwankungen im Verkehrsaufkommen, noch alle Reaktionen der Routing Protokolle auf irgendwelche Ereignisse im Netz exakt vorhersehbar.

Eine Aufgabe der Erfindung liegt darin, einen Weg aufzuzeigen, wie Dienste, die ihre spezifischen QoS Anforderungen zuverlässig und effizient einhalten, auf einfache, pragmatische und kostengünstige Weise in einem dienstintegrierten, paketorientierten und insbesondere IP basierten Netz realisiert werden können.

Diese Aufgabe wird durch die beanspruchten Gegenstände gelöst. Es wird eine weitgehende Verkehrsverteilung im Netz vorgeschlagen. Sie bewirkt u.a. eine für alle Dienste und Anwendungen weitestgehend ausgeglichene QoS mit Best Effort Charakter. Die erfindungsgemäße Verkehrsverteilung ermöglicht auch den Schritt über eine Single Routing Domain hinaus hin zu einer umfassenden Gesamtlösung.

Ein Verfahren zur Verteilung des Verkehrs in einem Kommunikationsnetz ist auch schon in DE 199 23 245 A beschrieben. Dort wird ein Routing-Verfahren offenbart, bei dem für die Informationsübermittlung für jeden Datenstrom jeweils eine von mehreren geeigneten Routen zumindest teilweise beliebig ausgewählt wird.

Das US-Patent 5,953,337 beschreibt ein Verfahren zur Verteilung von ATM-Zellen einer Verbindung über mehrere zwischen zwei Knoten existierende Routen. Durch die Verkehrsverteilung soll die Übertragungsqualität verbessert und das Abhören erschwert werden.

EP 1 133 112 A gibt ein Verfahren zur Verkehrslastverteilung in einem Kommunikationsnetz an, bei dem die Last der Links und Knoten des Netzes zentral festgestellt wird und den Netzknoten daraus ermittelte Verkehrsverteilungsinformationen übermittelt werden.

Allen diesen Ansätzen ist gemeinsam, daß sie zwar den vorhandenen Verkehr verteilen, dies aber auf mehr oder weniger vorherbestimmten Wegen tun und den einzelnen Netzknoten auf dem Weg zum Ziel praktisch keine Entscheidungsfreiheit mehr lassen. Darüber hinaus werden keine Maßnahmen zur Berücksichtigung möglicher QoS-Anforderungen offenbart, sodaß die Lösungsansätze über den genannten Best Effort Charakter nicht hinauskommen.

Ein wesentlicher Aspekt der Erfindung liegt im Sich-Lösen von herkömmlichen, eingefahrenen Denkschemata, z.B. dahingehend, Eigenschaften wie QoS und Zuverlässigkeit an ihrer Subjektivität anzugreifen und sie nicht mehr nur an einen Pfad oder Route gebunden, sondern als eine Gesamteigenschaft der Netzlösung zu definieren, die dabei wesentlich an Autonomie gewinnt und dadurch auch im Betreiben wirtschaftlicher wird. QoS auf der Netzebene betrachtet ermöglicht erst ihre Darstellung im verbindungslosen Betrieb. Diese erfindungsgemäße Betrachtung basiert u.a. auf folgenden Überlegungen:
a) Dienstqualität (QoS) ist ein relativer Begriff. Selbst wenn Information mit leitungsvermittelter Technik übertragen wird, können Datenverluste nicht ausgeschlossen werden (z.B. durch Störungen (-> Bitfehler) oder Rahmenschlupf). Solche Schwächen sind aber entweder tolerierbar (z.B. in der digitalen Telefonie) oder sie werden durch entsprechende Sicherungsmaßnahmen auf derselben (z.B. durch Redundanz) oder höheren Schichten (z.B. durch Wiederholungen) abgefangen (Datentechnik). Entscheidend ist im Endeffekt die (subjektive) Qualitäts-Wahrnehmung des Empfängers der Information. Echtzeitige, interaktive Kommunikation unter Einbeziehung von Menschen z.B. erfolgt immer über deren (analog arbeitende) Sinnesorgane, die durchaus mit unvollständiger Information umgehen können (sonst wären (vor allem mobiles) Telefonieren, Film und Fernsehen in der heutigen Ausprägung sicher nicht möglich). Für die interaktive Steuerung von Maschinen (z.B. Fernsteuerung von Robotern) sind die Anforderungen unter Umständen deutlich höher, so dass hier ggf. eine detailliertere Betrachtung jedes Einzelfalles erforderlich werden kann. In keinem Fall können aber die physikalischen Grenzen, z.B. in Bezug auf entfernungsabhängige Laufzeiten, unterschritten werden.
   QoS erfordert also nicht unbedingt eine absolute Garantie (die gibt es sowieso nicht, auch nicht unter Benutzung von Pfaden und Reservierungen), sondern die Einhaltung der entsprechenden spezifischen Anforderungen des jeweiligen-Dienstes aus der Sicht des Informationsempfängers. Bei paketorientierter Übermittlung betrifft dies vor allem Art und Umfang möglicher Informationsverluste, feste und/oder variable Verzögerungen und die zeitliche Konsistenz (Reihenfolge) der Information. Die ATM Technik z.B. setzt dabei auf nach den Regeln der Statistik dimensionierte Vermittlungsknoten und Übertragungsstrecken und das Prinzip der verbindungsorientierten Übermittlung mit entsprechend reservierten Ressourcen entlang der Pfade, wobei die korrekte Verteilung der Ressourcen entlang der Pfade durch zwar mächtige, aber in der Folge auch komplexe Queueing- und Scheduling-Mechanismen in den Netzknoten sichergestellt wird.
b) Moderne Hochgeschwindigkeits-(Daten-)Netze arbeiten in 'Wire Speed'. IP basierte Netze wie z.B. das Internet sehen zunächst einmal nur Datenpakete und behandeln diese a priori alle gleich: Das zuerst angekommene Paket wird auch zuerst weitergesendet, stehen gerade nicht genügend Übertragungsressourcen zur Verfügung, so werden die Pakete zunächst einmal gespeichert (Queueing, Buffer) und wenn auch kein Speicherplatz mehr zur Verfügung steht, werden überschüssige, ankommende Pakete verworfen (Best Effort Prinzip). Die Netzknoten in diesen Netzen, die sog. Router, waren ursprünglich Rechner, d.h. die komplette Funktionalität des Analysierens und Weiterleitens der Datenpakete war in Softwareprogrammen implementiert. Dementsprechend waren diese Netze bis vor kurzem auch vergleichsweise langsam. Mit Hilfe entsprechend dimensionierter Pufferspeicher und geeigneten Datensicherungs-Mechanismen in den höheren Protokollschichten, wie z.B. TCP, konnte (zwar oft mit großer Verzögerung,) aber immerhin doch eine ausreichend zuverlässige und brauchbare Übertragung zeitunkritischer Information erreicht werden.
   Technologische Fortschritte ermöglichten die Implementierung von elementaren Router-Funktionen in Hardware (ASICs, FPGAs) und eröffneten damit den Weg zur schnellen und damit auch auf höherratigen Verbindungsleitungen quasi echtzeitigen Weiterleitung der Datenpakete. Als verzögerndes Element bleibt dann praktisch nur noch das unvermeidliche Auspuffern von Konflikten bei gleichzeitiger Ankunft mehrerer Datenpakete, die auf denselben Ausgang geroutet werden. Diese Verzögerungen werden jedoch mit zunehmender Bandbreite (oder besser: Geschwindigkeit) der Verbindungsleitungen zwischen den Routern immer weniger signifikant, weil dann die konfliktbedingten Wartezeiten wegen des schnelleren Abflusses von Datenpaketen immer kleiner werden. Dies gilt insbesondere dann, wenn verschiedene Verkehrsströme durch entsprechende Markierung unterschieden und bei Queueing und Scheduling unterschiedlich behandelt werden können (DiffServ, 'Priorisierung').
c) Trotz dieser technologischen Fortschritte bleiben jedoch wesentliche dienstrelevante Aspekte weiterhin unberührt wie beispielsweise:
   - die Aggregierung von Verkehrsströmen auf den Routen im Netz, weshalb selbst bei sorgfältiger Kontrolle der Verkehrsströme an den Netzeingängen tiefer im Netz Schieflasten, die u.U. die QoS beeinträchtigen, nicht vorhergesagt und damit auch nicht vermieden werden können, oder
   - der hohe Aufwand und die daraus resultierende lange Zeitdauer für eine Rekonfiguration der Routen im Fehlerfall, wodurch die Verfügbarkeit von Netz und Diensten für die Anwender erheblich beeinträchtigt werden kann.

Ein erfindungsgemäßes Kommunikationsnetz umfasst nach dieser neuen, erfindungsgemäßen Betrachtung folgende Eigenschaften und Funktionalitäten (Grundidee):
- es arbeitet paketorientiert und verbindungslos,
- es bietet eine Mehrzahl von Eingangs- und Ausgangsports,
- es besteht aus einer Mehrzahl von Netzknoten, die so untereinander vermascht sind, dass (im Regelfall) eine Mehrzahl von Wegen zwischen verschiedenen Eingangs- und Ausgangsports existiert,
- es beinhaltet Mechanismen, die unter Berücksichtigung des jeweiligen Ziels (Ausgangsport) der Datenpakete jederzeit (d.h. möglichst an jedem Entscheidungspunkt im Netz) eine möglichst gleichmäßige Verteilung der Verkehrslast im Netz anstreben.

Damit werden die eingangs genannten Nachteile bestehender Netztechniken, die sich bei deren Einsatz als dienstintegriertes, paketorientiertes Netz ergeben, wie angestrebt weitgehend beseitigt und zugleich die erwünschten wirtschaftlichen Vorteile erzielt:
- Das Netz soll verbindungslos und paketorientiert sein. Damit kann insbesondere ein IP basiertes Netz zum Einsatz kommen, da dieses die genannten Voraussetzungen erfüllt.
- Eine gleichmäßige Verkehrsverteilung ermöglicht eine optimale Nutzung der Ressourcen bei höchster Qualität und damit wirtschaftlichste Dimensionierung. Somit wird eine kostengünstige Gesamtlösung bewirkt.
- Ein verbindungslos betriebenes Netz benötigt keine Steuerleistung für Verbindungsauf- und -abbau, keine Wegesuche, keine Umkonfigurierung von Wegen, keine Recovery von Pfaden im Fehlerfall, etc ... Es ist folglich einfach zu steuern und wirtschaftlich zu betreiben, da kaum administrative Eingriffe nötig sind und das Netz quasi selbstorganisierend ist.
- Die Aggregierung von Verkehrsströmen mit gleichem Ziel wird infolge der Verteilung per definitionem vermieden, weil auch einmal aggregierte Verkehrsströme im Laufe ihrer weiteren Übermittlung wieder auf unterschiedliche Leitungen des Netzes verteilt werden.
- Im Fehlerfall, d.h. dem Ausfall einer abgehenden Leitung, ist keine aufwändige Rekonfiguration von der von dem Ausfall betroffenen Verkehrsströme auf Ersatzrouten erforderlich. Stattdessen ist es ausreichend, die Verkehrsströme nicht mehr auf die ausgefallene Leitung zu verteilen. Zur Behebung des Fehlers ist also lediglich eine Absenkung des Verteilungsgrades erforderlich. Die Notwendigkeit einer Rekonfiguration entfällt.
- Schließlich ist die Lösung in ihrer Gesamtwirkung evident pragmatisch, weil durch den Wegfall aufwändiger Rekonfigurations- und Priorisierungsmechanismen der Konfigurationsaufwand für das Management der Netzes signifikant reduziert wird.

Weitere Merkmale können in unterschiedlicher Ausgestaltung und Zusammensetzung hinzugenommen werden. Einige mit besonders schönen Vorteilen verbundene Merkmale und Merkmalskombinationen sind, zusammen mit einigen möglichen Alternativlösungen, im Folgenden ausgeführt:
Die Verkehrsverteilung hat das Ziel, eine möglichst gleichmäßige Verteilung der Verkehrslast im Netz zu erreichen. Sie kann in unterschiedlicher Granularität, z.B. auf Basis von aggregierten Verkehrsströmen, pro individuellem Verkehrsstrom oder auf Basis einzelner Datenpakete erfolgen. Die Verteilung wird jedoch umso effizienter sein, je feiner ihre Granularität ist. Die Verteilungsentscheidung soll in jedem Netzknoten 'ad hoc' und automatisch erfolgen. Als Entscheidungskriterium dient Information, die mit den Datenpaketen angeliefert wird, z.B. eine Kombination von Source und Destination Address, ggf. zusammen mit weiterer Information, die z.B. der Zuordnung zu einem bestimmten Verkehrsstrom dient. Bei einer Verteilung auf Basis von Verkehrsströmen, nehmen alle Datenpakete, die zum selben Verkehrsstrom gehören, üblicherweise den gleichen Weg durchs Netz. Die qualitätssteigernde Wirkung der Verkehrsverteilung, Schieflasten bis hin zur Überlastung einzelner Netzabschnitte zuverlässig zu verhindern, ist hierbei vor allem bei ausreichender statistischer Masse oder gleichartigen Verkehrsströmen (insb. mit ähnlichen Bandbreiten) gegeben.

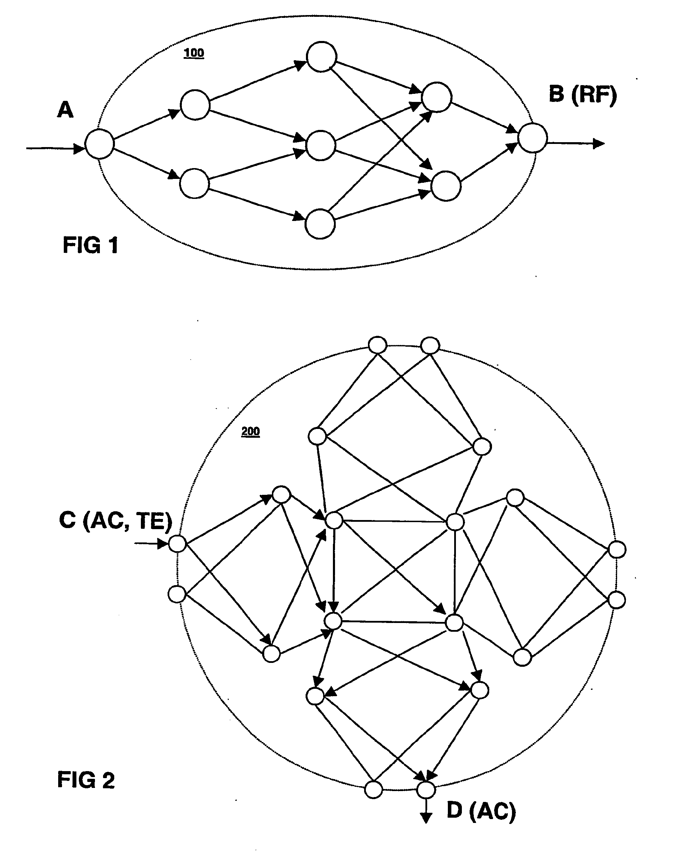

Im Falle einer vorgegebenen Topologie eines Netzes mit (theoretisch) regelmäßiger Verknüpfung / Vermaschung (siehe Figur 1) können Wegeinformationen für die Verkehrsverteilung und daraus resultierende 'Verzweigungsmuster' in den Netzknoten mehr oder weniger fest voreingestellt werden.

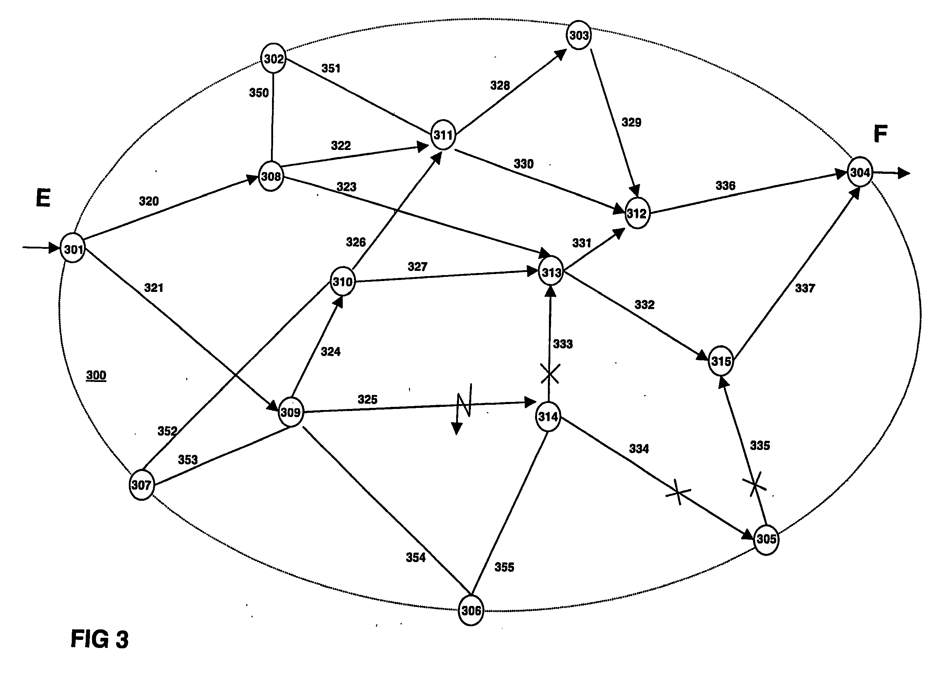

In einem realen, gewachsenen Datennetz (siehe Figur 3) ist die Vermaschung normalerweise unregelmäßig und eher unvollständig. Auch kommt es während des Betriebes immer wieder zu Veränderungen der Netzkonfiguration bzw. der Netztopologie. Erfindungsgemäß erfolgt hierfür ein flexibler Update der möglichen Wege und Verzweigungsmuster (nach Bedarf oder regelmäßig) und/oder der Knoten leitet sich aus einer veränderten Wegeinformation neue Verzweigungsmuster ab. Als Mechanismen für die Verteilung der Wegeinformation sind entsprechende Protokolle aus dem Internet-Umfeld (Routing Protokolle wie z.B. OSPF, BGP) oder daraus abgeleitete Varianten / Weiterentwicklungen vorstellbar. Selbstverständlich können diese Informationen aber auch über eine (wie auch immer geartete) Netzsteuerung oder ein Netzmanagement System vorgegeben werden.

Bei den Verzweigungsmustern können weitere Kriterien wie z.B. unterschiedliche Bandbreiten, verschiedene Entfernung zum Ziel, Wegekosten, etc. in den Algorithmen für die konkrete Wegeauswahl mitberücksichtigt werden. So kann z.B. bei paketweiser Verteilung zwischen einem STM-4 und einem STM-1 Link durch entsprechende Gewichtung nur jedes 5. Paket auf den STM-1-Link gegeben werden. Noch feiner lässt sich die Last verteilen, wenn dabei zusätzlich auch noch individuelle Paketlängen berücksichtigt werden. Eine Gewichtung der Links nach entsprechenden Kriterien ist auch von Vorteil, um in einem komplex vermaschten Netz die Bildung von Wegeschleifen zu vermeiden oder um z.B. Paketverzögerungsschwankungen zu begrenzen. Unterschiedliche Paketverzögerungen auf verschiedenen Wegen können zu einer Veränderung der Paketreihenfolge führen. Diese wird am Netzausgang wiederhergestellt (Resequencing), z.B. wenn eine Anwendung dies verlangen sollte.

Der Best Effort Charakter der erfindungsgemäßen Verkehrsverteilung, bei dem Dienste und Anwendungen von steigender Last (entsprechend ihren Eigenschaften und Erfordernissen mehr oder weniger spürbar) beeinträchtigt werden, lässt sich signifikant verbessern, wenn die Gesamtverkehrslast im Netz entsprechend der tatsächlichen Netzkapazität begrenzt wird.

Einerseits könnte dabei zusätzlich die Bandbreite der einzelnen Netzzugänge sowohl eingangs- als auch ausgangsseitig betrachtet und sowohl separat als auch im Gesamtbild mit berücksichtigt werden. Ausgehend von den statistischen Verkehrseigenschaften der verschiedenen Dienste und Anwendungen und basierend auf der Topologie des Netzes und der Kapazität und Leistungsfähigkeit der Netzknoten und Verbindungsleitungen wird dabei unter Annahme bestimmter Verhaltensmuster der Teilnehmer bzw. bestimmter daraus resultierender Verkehrscharakteristiken an den Netzzugängen das Netz so dimensioniert (Network Dimensioning), dass unter diesen Randbedingungen bestimmte Grenzwerte der QoS bestimmenden Faktoren wie z.B. Paketverlust (Loss Rate), -verzögerung (Delay) oder -verzögerungsschwankung (Delay Jitter) nur mit einer wohl definierbaren, ausreichend geringen statistischen Wahrscheinlichkeit überschritten werden.

Andererseits könnte der Verkehr in einem gegebenen Netz so begrenzt werden, dass die entsprechenden Randbedingungen eingehalten werden. Dazu werden sämtliche Kommunikationsbeziehungen und Datenströme im Netz entsprechend parametrisiert, bei jedem Auftreten individuell erfasst und, abhängig von der aktuellen Lastsituation im Netz, zugelassen oder abgewiesen (Admission Control).

So offenbart EP 1 119 216 A eine zentrale Zugangsfunktion, die den Knoten am Netzzugang unter Berücksichtigung der Gesamtübermittlungskapazität des Kommunikationsnetzes eine verfügbare Kapazität zur Übermittlung von Verkehrsströmen an das Kommunikationsnetz zur Verfügung stellt. Dabei werden jedoch mögliche Engpässe, die durch das Zusammentreffen von Datenströmen von verschiedenen Eingängen am selben Ausgang entstehen, nicht erfasst.

Beide Mechanismen, Überdimensionierung wie auch Zugangsbeschränkung, sind jeweils für sich genommen jedoch weder praktikabel noch wirtschaftlich. So ist z.B. weder eine Überdimensionierung der Netze zur Einhaltung der Erfordernisse von empfindlicheren Diensten in Hinblick auf weniger empfindliche Dienste wirtschaftlich vertretbar, noch ist eine Admission Control für einen Großteil der traditionellen und auch zu künftigen Internet Anwendungen, die auf eine Best Effort Umgebung ausgelegt sind, praktikabel.

Eine differenzierte und den Erfordernissen des jeweiligen Dienstes angepasste QoS wird erfindungsgemäß durch eine Unterscheidung und Einteilung in verschiedene Verkehrsklassen erfolgen, die entsprechend unterschiedlich behandelt, insbesondere priorisiert, werden. Die Zahl der Verkehrsklassen beträgt mindestens zwei. Für die Behandlung in den Netzknoten (d.h. an den Queueing Points) wird eine strikte Priorisierurig bevorzugt, denn alternative Verfahren (z.B. Weighted Fair Queueing WFQ), die auch niederprioren Verkehrsklassen unter allen Umständen Ressourcen garantieren, beeinträchtigen bei hoher Last meist den höherprioren Verkehr und sind naturgegeben um ein Vielfaches komplexer als die strikte Priorisierung, bei der solange kein niederpriorer Verkehr übermittelt wird, wie hochpriorer Verkehr zur Übermittlung ansteht.

In einem Kommunikationsnetz der oben beschriebenen Art kann das Merkmal der Priorisierung folgende vorteilhafte Anwendungen und Ausgestaltungen erfahren: Alle Datenströme werden entsprechend ihren Erfordernissen in entsprechende Prioritätsklassen eingeteilt. Die niedrigste Klasse wird bei der Netzdimensionierung (im Rahmen der erwarteten Gesamtverkehrsmenge) berücksichtigt und grundsätzlich nach dem Best Effort Prinzip behandelt. Für alle Kommunikationsbeziehungen bzw. Datenströme in höheren Prioritätsklassen wird eine zulässigkeitsprüfung (Admission Control) am Netzeingang (in Eingangsrichtung) und am Netzausgang (in Ausgangsrichtung) durchgeführt. Dazu werden diese Datenströme an diesen beiden Punkten mit entsprechenden Parametern (z.B. mittlere Daten- und/oder Paketrate, Spitzenrate, etc.) angemeldet und bewertet. Die Entscheidungen am Eingang und am Ausgang sind unabhängig voneinander und nur wenn beide Entscheidungen positiv sind, wird der Datenstrom zugelassen. Als Entscheidungskriterium kann z.B. ein Schwellenwert dienen, der abhängig von der Kapazität des Ports, der gesamten Netzkapazität, der gewünschten Qualität in Bezug auf mögliche Paketverzögerungen und -verluste etc. der jeweiligen Prioritätsklasse und ggf. weiteren Kriterien bestimmt wird. Denkbar ist auch, dass es für jede Klasse mehrere Schwellenwerte auf Basis unterschiedlicher Bewertungsparameter gibt, die alle individuell oder in entsprechenden Abhängigkeiten voneinander einzuhalten sind.

Mit der Zulässigkeitsprüfung wird zum einen die Gesamtverkehrsmenge einer bestimmten Prioritätsklasse im Netz begrenzt und zum anderen auch die zugehörige Verkehrsmenge an jedem individuellen Eingangs- und Ausgangsport limitiert. Durch die gleichmäßige Verteilung des Verkehrs im Netz (idealerweise auf Paketbasis) und die entsprechend bevorzugte Behandlung wird dieser Verkehr bei richtig eingestellten Schwellen immer ausreichend Ressourcen (freie Link-Kapazität, Pufferspeicher) im Netz vorfinden, um sowohl die Verzögerungs- als auch die Verlustgrenzwerte seiner Qualitätsanforderungen einhalten zu können. Das Netz kann dabei durchaus voll ausgelastet und wirtschaftlich betrieben werden, weil alle von hochpriorem Verkehr nicht genutzte Bandbreite jederzeit von niederpriorem Verkehr genutzt werden kann.

Idealerweise wird die bevorzugte Behandlung durch strikte Priorität, d.h. bei Bedarf vollständige Verdrängung niederprioren Verkehrs bewirkt. Strikte Priorität gibt minimalen Delay und minimalen Verlust. Zudem ist dies ein deutlich einfacherer Prioritätsmechanismus als z.B. das aus dem Stand der Technik bekannte Weighted Fair Queueing Verfahren.

Die Einhaltung der angemeldeten Verkehrsparameter der einzelnen Datenströme wird überwacht, weil im Rahmen der Verkehrsverteilung auch ein einzelner Datenstrom, der "ordentlich über die Stränge schlägt", den gesamten Verkehr im gesamten Netz erheblich stören kann. Die Überwachungsfunktion (Traffic Enforcement, Policing) kann vorteilhaft relativ unempfindlich und damit kostengünstig ausgelegt werden, weil eine zufällige, kurzzeitige, geringfügige Überschreitung bereits durch die erfindungsgemäße Verkehrsverteilung entsprechend ausgemittelt wird.

Die Überwachungsfunktion wird vorteilhaft auf die individuellen Datenströme angewendet, so wie sie angemeldet wurden. Als Alternative ist ein irgendwie geartetes Aggregieren pro Port vorgesehen, bei dem lediglich ein Gesamtlimit überprüft und als Reaktion auf eine Überschreitung des Gesamtlimits innerhalb eines Aggregats wahllos und ggf. quer durch alle enthaltenen Datenströme eingegriffen wird. Einsetzbar sind prinzipiell beliebige und natürlich auch alle einschlägig bekanntenen Mechanismen (z.B. Leaky Bucket) und dasselbe gilt auch für die Reaktionsmöglichkeiten (Verwerfen von Paketen, Markieren von Paketen, Abschalten / Blockieren von Datenströmen, ...). Ein Markieren kann u.U. auch in einem Umsetzen der die Vereinbarung verletzenden Pakete (oder besser des gesamten zugehörigen Datenstromes) auf eine niedrigere oder die Best Effort Klasse bestehen.

Das Prinzip der Verkehrsverteilung (insbesondere, wenn diese auf Paketebene erfolgt) kann auch sehr vorteilhaft eingesetzt werden, um die Zuverlässigkeit und Verfügbarkeit von Netz und Diensten zu verbessern. Dazu genügt es, dass die Netzknoten beim Erkennen eines Fehlers (z.B. Link ausgefallen, Nachbarknoten ausgefallen) den/die zugehörigen Link(s) aus dem Verzweigungsfächer herausnehmen und die Verteilung nur noch über die verbliebenen Links weiterführen. Die Entscheidung kann bei eigenem Erkennen des Fehlerzustandes unverzüglich und autonom und bei Fremderkennen mit Verfügbarkeit der Information erfolgen. Bei ausreichender Dimensionierung des Netzes führt eine solche Reaktion schlimmstenfalls zu etwas mehr Verdrängung von Best Effort Verkehr, aber zu keinerlei Qualitätseinbussen des hochprioren Verkehrs. Dieser besonders schöne Vorteil wird bei der erfindungsgemäßen Kombination erkennbar auf sehr einfache, pragmatische und kostengünstige Weise bewirkt, da - in Relation zum eingangs beschriebenen Stand der Technik gesehen - vergleichsweise einfache Mechanismen zum Einsatz kommen.

Eine sehr interessante Variante der Grundidee ergibt sich, wenn das Verfahren der Verkehrsverteilung nur auf die höherpriore(n) Verkehrsklasse(n) angewendet wird. Der Best Effort Verkehr wählt sich seine Routen nach den heute gängigen Prinzipien des Internet, während der höherpriore Verkehr sich gleichmäßig im Netz verteilt und dieses quasi von unten auffüllt. Der Best Effort Verkehr schwimmt quasi auf einem moderat gefüllten Meer von höherpriorem Verkehr und wird bei steigender 'Flut' immer mehr verdrängt. Ein schöner Vorteil dieser Variante besteht darin, dass die QoS Lösung ergänzend auf bestehende Netze aufgesetzt werden kann, während die vorhandenen Mechanismen unverändert weiterbestehen.

Das vorgestellte Prinzip ist auch in einem zellenbasierten Netz, z.B. einem ATM Netz, anwendbar.

Die Zuverlässigkeit des Netzes wird durch Selbstüberwachungsmechanismen im Router, insbesondere im Rahmen des Verteilungsverfahrens, weiter verbessert.

Zur Erhöhung der Zuverlässigkeit über das Gesamtnetz wird optional zudem eine Art von schnellem Feedback Mechanismus zwischen den Routern eingesetzt, der es z.B. ermöglicht bei Problemen, die irgendwo 'downstream' aufgetreten sind, auch weiter 'upstream' schon frühzeitig den Verkehr anders zu verteilen.

Die Admission Control ist ggf. so ausgestaltet, dass sie bei 'Überbuchung' einer hochprioren Verkehrsklasse dem Nutzer automatisch die nächstniedrigere Klasse anbietet.

Die Resequencing Funktion wird generell, z.B. als Standardfunktion, am Netzausgang vorgesehen. Vorteilhaft können so alle heutigen TCP-Anwendungen, in denen die Resequencing Funktion üblicherweise nicht implementiert ist, unverändert weiterverwendet werden.

Die Erfindung wird im folgenden anhand von weiteren Ausführungsbeispielen, die in den Figuren dargestellt sind, noch weiter erläutert.
- Figur 1: eine Anordnung zur Durchführung des erfindungsgemäßen Verfahrens, die als beispielhaftes, zur Veranschauli- chung des Grundprinzips für die Verkehrsverteilung in einem regulär, über verschiedene Stufen (Netzebenen) vermaschtes Netz ausgebildet ist,
- Figur 2: eine Anordnung zur Durchführung des erfindungsgemäßen Verfahrens, die als eine von vielen möglichen konkre- teren Ausführungsformen der Erfindung ausgebildet ist,
- Figur 3: eine Anordnung zur Durchführung des erfindungsgemäßen Verfahrens, die als reales, gewachsenes (Daten-) Netz mit unregelmäßiger und eher unvollständiger Verma- schung ausgebildet ist,

In den Figuren sind diejenigen Übermittlungskanten, entlang denen jeweils Verkehrsströme verteilt übermittelt werden, jeweils mit einer gerichteten Pfeilspitze gekennzeichnet, wodurch zugleich die Richtung der Übermittlung angezeigt wird.

Eine Ausführung der Erfindung liefert ein verbindungsloses, paketorientiertes Kommunikationsnetz,
- mit mindestens zwei unterschiedlichen Verkehrsklassen, von denen eine als reiner Best Effort Verkehr behandelt wird, während die zumindest eine andere demgegenüber (und bei mehreren anderen vorzugsweise auch untereinander) strikt priorisiert wird,
- mit Netzknoten, von denen der Verkehr individuell und autonom mit dem Ziel einer gleichmäßigen Verkehrslastverteilung vorzugsweise auf Basis von Paketen nach bestimmten Regeln auf alle oder zumindest eine Mehrzahl von Wege(n) in Richtung auf deren Ziel (Netzausgang) verteilt wird,
- in dem die Netzknoten die Information über verfügbare Routen durch entsprechende Protokolle austauschen/verbreiten,
- in dem die Netzknoten im Fehlerfall unverzüglich und autonom ihre (Verkehrs-) Verteilungsmuster anpassen,
- das für die Datenströme der zumindest einen höheren Verkehrsklasse am vorzugsweise jedem Eingang und Ausgang eine Admission Control auf Basis bestimmter Verkehrsparameter vornimmt (die zum Beispiel weiteren Verkehr dieser Verkehrsklasse(n) ab einer erreichten Gesamtlast von x% (x%, (x+d)%, (x+nd)%) der Portkapazität nicht mehr zulässt),
- das einen Datenstrom der zumindest einen höheren Verkehrsklasse nur dann akzeptiert, wenn beide Admission Controls (am Eingangsport und am Ausgangsport - unabhängig voneinander!) positiv entschieden haben,
- das an jedem Eingang die angemeldeten Verkehrsparameter der Datenströme der höheren Verkehrsklasse(n) überwacht und ggf. mit geeigneten Maßnahmen einschreitet, und
- das an jedem Ausgang eine Resequencing Funktion zur optionalen Nutzung durch die (alle) Datenströme anbietet.

Eine weitere Ausführung der Erfindung ist in dem in Figur 1 aufgezeigten Kommunikationsnetz 100 dargestellt. Bei dem Netz 100 wird ausgehend von einem als Eingangsknoten ausgebildeten Übermittlungsknoten A zumindest ein Verkehrsstrom an einen als Ausgangsknoten ausgebildeten Übermittlungsknoten B verteilt übermittelt. Dabei erfolgt die verteilte Übermittlung in dem Netz 100 derart, dass von den meisten Übermittlungsknoten des Netzes 100 der jeweils empfangene Anteil des oder der Verkehrsströme an genau zwei nachfolgende Übermittlungsknoten verteilt übermittelt wird. Lediglich die beiden unmittelbar vor dem Ausgangsknoten B angeordneten Übermittlungsknoten übermitteln in Ermangelung von alternativen Restwegen ohne netzweite Verteilung direkt an den Ausgangsknoten B, damit in diesem die verteilt übermittelten Anteile wieder zu den ursprünglichen Verkehrsströmen zusammengeführt werden können. Am Ausgangsknoten B kommen dabei vorliegend die verteilten Verkehrsströme aus zwei unterschiedlichen Richtungen an. Vorzugsweise wird am Ausgangsknoten mittels einer zugeordneten Resequencing Function RF eine Umsortierung der empfangenen Anteile der Verkehrsströme in deren ursprüngliche Reihenfolge bewirkt. Somit können in dem Netz 100 auch Verkehrsströme zwischen Anwendungen übermittelt werden, die auf eine Übermittlung unter Beibehaltung der ursprünglichen Reihenfolge vor der Übermittlung angewiesen sind, ohne dass hierfür eine Veränderung und/oder Anpassung der Anwendungen erforderlich wäre.

In Figur 2 ist eine alternative Ausführung der Erfindung dargestellt, die als Kommunikationsnetz 200 ausgebildet ist. Bei dem Netz 200 wird ausgehend von einem als Eingangsknoten ausgebildeten Übermittlungsknoten C zumindest ein Verkehrsstrom an einen als Ausgangsknoten ausgebildeten Übermittlungsknoten D verteilt übermittelt. Dabei wird im Gegensatz zum Netz 100 lediglich ein Teil der Übermittlungskanten des Netzes 200 zur verteilten Übermittlung zwischen den beiden Knoten C und D eingesetzt. Dies beruht darauf, dass in dem Netz 200 nicht jeder beliebige Weg von dem Knoten C zu dem Knoten D zur verteilten Übermittlung genutzt wird, sondern nur diejenigen Wege, die hierfür besonders geeignet sind. Dies sind im vorliegenden Beispiel diejenigen Wege, die unter Berücksichtigung der Topologie des Netzes 200 keinen zu großen Umweg durch das Netz 200 nehmen und somit alle mit einer Transmission Delay behaftet sind, die vorzugsweise innerhalb eines relativ kleinen, vorgegebenen Toleranzbereiches liegt. Wege, die zwar ebenfalls vom Knoten C zum Knoten D führen, deren Transmission Delay aber zu weit von dem Toleranzbereich abweicht, sind für diese beispielhafte verteilte Übermittlung nicht geeignet.

Die Verkehrsströme werden vorzugsweise in jedem Übermittlungsknoten zwischen den Knoten C und D paketweise verteilt an die jeweiligen Nachfolgeknoten übermittelt. Zudem wird die Verteilung unter Berücksichtigung der Auslastung der jeweils verbleibenden Restwege und/oder der Länge der jeweils an die Restwege übermittelten Pakete vorgenommen. Dies führt im Ergebnis zu einer weitgehend gleichmäßig verteilten Übermittlung zwischen den Knoten C und D. Wird dieses Prinzip zwischen allen Eingangs- und Ausgangsknoten des Netzes 200 angewandt, so wird das Netz 200 von unten mit einem Basisbestand von verteiltem Verkehr befüllt, wobei die Auslastung der Übermittlungsknoten und Übermittlungskanten für das gesamte Netz 200 in etwa ähnlich ist. Kein Teil des Netzes 200 bleibt, verglichen mit dem Rest des Netzes 200, für längere Zeit in einer Überlast.

Wird im Netz 200 der zuströmende Verkehr in zwei Verkehrsklassen aufgeteilt, der höherpriore Verkehr bevorzugt und verteilt übermittelt, und die Menge des höherprioren Verkehrs mit Hilfe von Zulässigkeitsprüfungen AC und Verkehrsüberwachungen TE begrenzt, so kann der höherpriore Verkehr annähernd mit Echtzeit Charakter in dem Netz 200 übermittelt werden. Für den niederprioren Verkehr wird Best Effort Charakter erreicht, wobei dessen Qualität bei einer Zunahme des höherprioren Verkehrs abnimmt und umgekehrt. Für die Priorisierung des Verkehrs ist eine strikte Priorisierung völlig ausreichend. Diese zeichnet sich im Vergleich zu anderen bekannten Priorisierungsmechanismen durch ihre besondere Einfachheit aus, weshalb deren Realisierung in den Übermittlungsknoten wirtschaftlich besonders vorteilhaft erfolgen kann.

Weitere Aspekte der Erfindung sind in dem Kommunikationsnetz 300 gemäß Figur 3 dargestellt. Das Netz 300 umfasst mehrere Übermittlungsknoten 301-315, wobei die Übermittlungsknoten 301-307 als Eingangs- und/oder Ausgangsknoten ausgebildet sind. Es wird ausgehend von dem zumindest als Eingangsknoten 301 ausgebildeten Übermittlungsknoten E zumindest ein Verkehrsstrom an den zumindest als Ausgangsknoten 304 ausgebildeten Übermittlungsknoten F zunächst wie folgt verteilt übermittelt:

| von Knoten | über Kante | zu Knoten |
|---|---|---|
| **301** | 320 | 308 |
| | 321 | 309 |
| 308 | 322 | 311 |
| | 323 | 313 |
| 309 | 324 | 310 |
| | 325 | 314 |
| 311 | 327 | 303 |
| | 329 | 312 |
| 313 | 330 | 312 |
| | 331 | 315 |
| 310 | 326 | 311 |
| | 327 | 313 |
| 314 | 333 | 313 |
| | 334 | 305 |
| 303 | 329 | 312 |
| 305 | 335 | 315 |
| 312 | 336 | **304** |
| 315 | 337 | **304** |

Es ist gut zu erkennen, dass von jedem Übermittlungsknoten zwischen den Knoten E und F, von dem mehr als ein Restweg zum Ausgangsknoten F ausgeht, der an diesen gesendete Verkehr auf zumindest zwei Restwege verteilt übermittelt wird.

Weiterhin ist in Figur 3 dargestellt, wie sich das Verzweigungsmuster bei Ausfall der Übermittlungskante 325 verändert. Als Folge wird im Vorgängerknoten 309 die Übermittlungskante 325 aus dem für Übermittlung in Richtung des Ausgangsknoten F gespeicherten Verzweigungsfächer gelöscht. Mithin wird kein Verkehr mehr an die der Übermittlungskante 325 nachgelagerten Übermittlungsknoten 314 und 305 gesendet. Die ebenfalls nachgelagerten Übermittlungsknoten 313, 312 und 315 empfangen jedoch weiterhin Verkehr, der auf anderen, nicht die ausgefallene Übermittlungskante 325 umfassenden Wegen des Verzweigungsmusters verteilt übermittelt wird. Nach Ausfall der Übermittlungskante 325 ändert sich das obige Verzweigungsmuster somit wie folgt:

| von Knoten | über Kante | zu Knoten |
|---|---|---|
| 301 | 320 | 308 |
| | 321 | 309 |
| 308 | 322 | 311 |
| | 323 | 313 |
| 309 | 324 | 310 |
| 311 | 327 | 303 |
| | 329 | 312 |
| 313 | 330 | 312 |
| | 331 | 315 |
| 310 | 326 | 311 |
| | 327 | 313 |
| 303 | 329 | 312 |
| 312 | 336 | 304 |
| 315 | 337 | 304 |

Es ist deutlich zu erkennen, dass der Ausfall der Übermittlungskante 325 lediglich zu einer Ausdünnung des Verzweigungsmuster führt, jedoch keine Rekonfiguration des Netzes 300 erforderlich macht. Insbesondere wird der Ausgangsknoten F weiterhin über zwei Wege erreicht. Es ist evident, dass die Erfindung gegenüber Ausfällen von Übermittlungsknoten oder - kanten auf äußerst pragmatische Weise hochgradig robust ist.
Je höher der Vermaschungsgrad des Kommunikationsnetzes ist, desto mehr Wege gibt es zwischen den Eingangs- und den Ausgangsknoten, so dass selbst bei Ausfall eines Großteiles des Netzes in den meisten Fällen immer noch mindestens ein Weg verbleibt, auf dem weiterhin Verkehrsströme übermittelt werden können. Eine vollständige Unterbrechung tritt nurmehr dann ein, wenn das Kommunikationsnetz mehr oder wenig vollständig ausfällt. In diesem Fall wäre aber auch die aus dem Stand der Technim bekannte aufwändige Rekonfiguration der Wege wenig hilfreich. Allenfalls wäre sie dann möglich, wenn im Normalbetrieb als ungeeignet eingestufte Wege noch funktionsfähig wären. In diesem Fall wäre bei zumindest teilweisem Ausfall der bestehenden Verzweigungsmuster eine Rekonfiguration der noch funktionsfähigen Übermittlungsknoten auf neue, weniger optimale Verzweigungsmuster möglich. Die infolge des Ausfalls unterbrochenen Übermittlungen können dabei nach der Rekonfiguration wieder aufgenommen werden, sofern alternative Wege gefunden wurden.

Es sei betont, dass die Beschreibung der für die Erfindung relevanten Komponenten des einheitlichen Kommunikationsnetzes grundsätzlich nicht einschränkend zu verstehen ist. Für einen einschlägigen Fachmann ist insbesondere offensichtlich, dass die verwendeten Begriffe funktional und nicht physikalisch zu verstehen sind. Somit können die Komponenten auch teilweise oder vollständig in Software und/oder über mehrere physikalische Einrichtungen verteilt realisiert werden.

## Patentansprüche

1. Verfahren zur Übermittlung von Verkehrsströmen in einem verbindungslosen, paketorientierten Kommunikationsnetz (100, 200, 300), das eine Mehrzahl von Übermittlungsknoten (301-315) umfasst, die so untereinander verbunden sind, dass eine Mehrzahl von Wegen zwischen den Übermittlungsknoten existiert,
- wobei zumindest ein Teil der Übermittlungsknoten als Eingangsknoten (301-307, A, C, E) und/oder als Ausgangsknoten (301-307, B, D, F) des Kommunikationsnetzes ausgebildet ist und
- die Verkehrsströme von den Eingangsknoten an die Ausgangsknoten gesendet werden,
mit folgenden Schritten:
- die Verkehrsströme werden in zumindest zwei Verkehrsklassen - zumindest eine ohne Priorität und zumindest eine mit Priorität - unterteilt,
- der Zustrom der prioren Verkehrsströme in das Kommunikationsnetz wird mit Hilfe einer Zulässigkeitsprüfung (AC) begrenzt, die für jeden prioren Verkehrsstrom am jeweiligen Eingangsknoten und am jeweiligen Ausgangsknoten durchgeführt wird,
- für zumindest einen der Übermittlungsknoten, der zumindest einen Teil der gesendeten Verkehrsströme empfängt (301, 303-305, 308-315), wird mehr als ein von ihm ausgehender Restweg zu zumindest einem der Ausgangsknoten ermittelt,
- von diesem Übermittlungsknoten werden die zu diesem Ausgangsknoten gesendeten Verkehrsströme auf zumindest zwei der ermittelten Restwege verteilt übermittelt.

2. Verfahren nach einem der vorstehenden Ansprüche,
bei dem von zumindest einem der Übermittlungsknoten für zumindest einen Verkehrsstrom zu einem bestimmten Ausgangsknoten die Verteilung so bewirkt wird, dass dessen Pakete verteilt übermittelt werden.

3. Verfahren nach einem der vorstehenden Ansprüche,
bei dem von zumindest einem der Übermittlungsknoten für zumindest einen Ausgangsknoten die Verteilung so bewirkt wird, dass die Verkehrsströme zu diesem Ausgangsknoten verteilt übermittelt werden, während die zugehörigen Pakete jedes Verkehrsstroms unverteilt übermittelt werden.

4. Verfahren nach einem der vorstehenden Ansprüche,
bei dem von zumindest einem der Übermittlungsknoten für zumindest einen Ausgangsknoten die Verteilung so bewirkt wird, dass unterschiedliche Aggregationen von Verkehrsströmen verteilt übermittelt werden, während die zugehörigen Verkehrsströme jeder Aggregation unverteilt übermittelt werden.

5. Verfahren nach einem der vorstehenden Ansprüche,
bei dem die Restwege unter Berücksichtigung von zumindest einem Verzweigungsfächer, in dem die für die Verteilung der Verkehrsströme geeigneten Restwege gespeichert sind, ermittelt werden.

6. Verfahren nach Anspruch 5,
bei dem ein zwar geeigneter, aber ausgefallener und/oder fehlerhafter Restweg in dem Verzweigungsfächer entsprechend **gekennzeichnet** oder aus dem Verzweigungsfächer gelöscht wird.

7. Verfahren nach einem der vorstehenden Ansprüche,
bei dem diejenigen Restwege für eine verteilte Übermittlung ermittelt werden, die hinsichtlich ihrer Bandbreite, ihrer Entfernung zum Ausgangsknoten, ihrer Kosten und/oder ihrer aktuellen Auslastung innerhalb eines vorgegebenen Toleranzbereiches liegen.

8. Verfahren nach einem der vorstehenden Ansprüche,
bei dem die Verteilung der Verkehrsströme unter Berücksichtigung der jeweiligen Auslastung der geeigneten Restwege und/oder des jeweiligen Umfangs der an die einzelnen Restwege bereits übermittelten Verkehrsstromanteile vorgenommen wird.

9. Verfahren nach Anspruch 8, bei dem zur Bestimmung der Verkehrsstromanteile die Länge der jeweils übermittelten Datenpakete herangezogen wird.

10. Verfahren nach einem der vorstehenden Ansprüche,
bei dem die prioren Verkehrsklassen in den Übermittlungsknoten strikt priorisiert übermittelt werden.

11. Verfahren nach einem der vorstehenden Ansprüche,
bei dem die prioren Verkehrsströme verteilt übermittelt werden.

12. Verfahren nach einem der vorstehenden Ansprüche,
bei dem die beiden Zulässigkeitsprüfungen unabhängig voneinander durchgeführt werden und der überprüfte Verkehrsstrom nur dann zur Übermittlung zugelassen wird, wenn beide Zulässigkeitsprüfungen positiv ausgefallen sind.

13. Verfahren nach einem der vorstehenden Ansprüche,
bei dem überwacht wird, ob von den prioren Verkehrsströmen zumindest ein vorgegebener Verkehrsparameter eingehalten wird.

14. Verfahren nach Anspruch 13,
bei dem Überschreitungen des Verkehrsparameters, die durch die Verkehrsverteilung entsprechend ausgemittelt werden, toleriert werden.

15. Verfahren nach einem der Ansprüche 13 oder 14,
bei dem bei Überschreitungen des Verkehrsparameters, die durch die Verkehrsverteilung nicht entsprechend ausgemittelt werden, der den Verkehrsparameter überschreitende Verkehrsanteil ohne Priorität übermittelt wird.

16. Verfahren nach einem der Ansprüche 13 bis 15,
bei dem zumindest für einen Teil der Ports der Zugangsknoten, über die priore Verkehrsströme in das Kommunikationsnetz übermittelt werden, überprüft wird, ob zumindest ein Gesamtlimit dessen, was in das Kommunikationsnetz maximal übermittelt werden darf, eingehalten wird.

17. Verfahren nach einem der Ansprüche 13 bis 16,
bei dem zumindest für einen Teil der Verkehrsströme individuell pro Verkehrsstrom überprüft wird, ob der vorgegebene Verkehrsparameter eingehalten wird.

18. Verfahren nach einem der vorstehenden Ansprüche,
bei dem zumindest bei einem Teil der Ausgangsknoten mit Hilfe einer jeweils zugeordneten Resequencing Function (RF) zumindest für die verteilt übermittelten Verkehrsströme deren ursprüngliche Reihenfolge, so wie sie vor deren Übermittlung in dem Kommunikationsnetz bestanden hatte, wiederhergestellt wird.

19. Kommunikationsnetz (100, 200, 300), umfassend Mittel, die zur Durchführung aller Schritte eines Verfahrens nach einem der vorstehenden Verfahrensansprüche eingerichtet sind.

20. Vorrichtung, umfassend
- Mittel, die zur Durchführung derjenigen Schritte eines Verfahrens nach einem der vorstehenden Verfahrensansprüche eingerichtet sind, die von der Vorrichtung bewirkt werden,
- Mittel, die zur Durchführung von gemäß dem Verfahren vorgeschriebenen Wechselwirkungen der Vorrichtung mit weiteren Vorrichtungen, von denen die restlichen Schritte des Verfahrens durchgeführt werden, eingerichtet sind.

21. Vorrichtung nach dem vorstehenden Anspruch,
die als Computerprogrammprodukt ausgebildet ist und deren Mittel als Programmcodes ausgestaltet sind, die zur Durchführung des Verfahrens von zumindest einem Prozessor ausgeführt werden.

## Claims

1. Method for the transmission of traffic streams in a connectionless, packet-oriented communication network (100, 200, 300) which comprises a plurality of transmission nodes (301-315) which are connected to one another such that there are a plurality of paths between the transmission nodes,
- wherein at least some of the transmission nodes are in the form of input nodes (301-307, A, C, E) and/or in the form of output nodes (301-307, B, D, F) of the communication network, and
- the traffic streams are sent from the input nodes to the output nodes,
having the following steps:
- the traffic streams are divided into at least two traffic classes - at least one without priority and at least one with priority -,
- the inflow of the priority traffic streams into the communication network is limited using an admissibility check (AC) which is performed for each priority traffic stream at the respective input node and at the respective output node,
- for at least one of the transmission nodes, which receives at least some of the sent traffic streams (301, 303-305, 308-315), more than one outbound residual path to at least one of the output nodes is identified,
- this transmission node transmits the traffic streams sent to this output node in a manner distributed over at least two of the identified residual paths.

2. Method according to the preceding claim, in which at least one of the transmission nodes effects the distribution for at least one traffic stream to a particular output node such that the packets thereof are transmitted in a distributed manner.

3. Method according to one of the preceding claims, in which at least one of the transmission nodes effects the distribution for at least one output node such that the traffic streams to said output node are transmitted in a distributed manner, while the associated packets of each traffic stream are transmitted in an undistributed manner.

4. Method according to one of the preceding claims, in which at least one of the transmission nodes effects the distribution for at least one output node such that different aggregations of traffic streams are transmitted in a distributed manner, while the associated traffic streams of each aggregation are transmitted in an undistributed manner.

5. Method according to one of the preceding claims, in which the residual paths are identified taking account of at least one branching fan in which the residual paths suitable for the distribution of the traffic streams are stored.

6. Method according to Claim 5,
in which an admittedly suitable but dead and/or defective residual path is marked accordingly in the branching fan or is erased from the branching fan.

7. Method according to one of the preceding claims, in which those residual paths which are situated within a prescribed tolerance range in terms of their bandwidth, their distance from the output node, their costs and/or their current utilization level are identified for a distributed transmission.

8. Method according to one of the preceding claims, in which the traffic streams are distributed taking account of the respective utilization level of the suitable residual paths and/or the respective volume of the traffic stream portions already transmitted to the individual residual ways.

9. Method according to Claim 8, in which the length of the respectively transmitted data packets is used for determining the traffic stream portions.

10. Method according to one of the preceding claims, in which the priority traffic classes in the transmission nodes are transmitted in a strictly prioritized manner.

11. Method according to one of the preceding claims, in which the priority traffic streams are transmitted in a distributed manner.

12. Method according to one of the preceding claims, in which the two admissibility checks are performed independently of one another and the checked traffic stream is admitted for transmission only if the result of both admissibility checks is positive.

13. Method according to one of the preceding claims, in which monitoring is performed to determine whether the priority traffic streams observe at least one given traffic parameter.

14. Method according to Claim 13, in which violations of the traffic parameter which are compensated for by the traffic distribution as appropriate are tolerated.

15. Method according to one of Claims 13 and 14, in which violations of the traffic parameter which are not compensated for by the traffic distribution as appropriate prompt the traffic portion which violates the traffic parameter to be transmitted without priority.

16. Method as claimed in one of Claims 13 to 15, in which at least some of the ports of the access nodes which are used to transmit priority traffic streams to the communication network have a check performed to determine whether at least an overall limit for what can be transmitted to the communication network as a maximum is being observed.

17. Method according to one of Claims 13 to 16, in which at least some of the traffic streams have a check performed individually per traffic stream to determine whether the given traffic parameter is being observed.

18. Method according to one of the preceding claims, in which at least some of the output nodes use a respectively associated resequencing function (RF) to restore the original order of at least the traffic streams transmitted in a distributed manner as it was before they were transmitted in the communication network.

19. Communication network (100, 200, 300), comprising means which are set up to perform all the steps of a method according to one of the preceding method claims.

20. Apparatus, comprising
- means which are set up to perform those steps of a method according to one of the preceding method claims which are prompted by the apparatus,
- means which are set up to perform interactions - prescribed in line with the method - between the apparatus and further apparatuses which perform the remaining steps of the method.

21. Apparatus according to the preceding claim, which is in the form of a computer program product and the means of which are in the form of program codes which are executed by at least one processor in order to perform the method.

## Revendications

1. Procédé de transmission de flux de trafic dans un réseau de communication sans connexion orienté paquets (100, 200, 300) qui comprend une pluralité de noeuds de transmission (301-315) qui sont reliés entre eux de manière telle qu'il existe une pluralité de chemins entre les noeuds de transmission,
- au moins une partie des noeuds de transmission se présentant sous la forme de noeuds d'entrée (301-307, A, C, E) et/ou de noeuds de sortie (301-307, B, D, F) du réseau de communication et
- les flux de trafic étant envoyés des noeuds d'entrée aux noeuds de sortie,
comportant les étapes suivantes :
- les flux de trafic sont subdivisés en au moins deux classes de trafic - au moins une sans priorité et au moins une avec une priorité ;
- l'afflux des flux de trafic affectés d'une priorité dans le réseau de communication est limité à l'aide d'un contrôle d'admissibilité (AC) qui est effectué, pour chaque flux de trafic affecté d'une priorité, au niveau du noeud d'entrée respectif et au niveau du noeud de sortie respectif ;
- pour au moins l'un des noeuds de transmission qui reçoit au moins une partie des flux de trafic émis (301, 303-305, 308-315), plus d'un chemin restant qui en part et qui mène à au moins l'un des noeuds de sortie est déterminé ;
- ledit noeud de transmission transmet les flux de trafic envoyés audit noeud de sortie de manière répartie sur au moins deux des chemins restants déterminés.

2. Procédé selon l'une des revendications précédentes, dans lequel au moins l'un des noeuds de transmission provoque la répartition, pour au moins un flux de trafic vers un noeud de sortie déterminé, de manière telle que les paquets de celui-ci sont transmis de manière répartie.

3. Procédé selon l'une des revendications précédentes, dans lequel au moins l'un des noeuds de transmission provoque la répartition, pour au moins un noeud de sortie, de manière telle que les flux de trafic vers ce noeud de sortie sont transmis de manière répartie tandis que les paquets associés de chaque flux de trafic sont transmis de manière non répartie.

4. Procédé selon l'une des revendications précédentes, **caractérisé en ce qu'**au moins l'un des noeuds de transmission provoque la répartition, pour au moins un noeud de sortie, de manière telle que différentes agrégations de flux de trafic sont transmises de manière répartie tandis que les flux de trafic associés de chaque agrégation sont transmis de manière non répartie.

5. Procédé selon l'une des revendications précédentes, dans lequel les chemins restants sont déterminés compte tenu d'au moins un éventail d'embranchements dans lequel sont stockés les chemins restants appropriés pour la répartition des flux de trafic.

6. Procédé selon la revendication 5, dans lequel un chemin restant approprié, mais défaillant et/ou erroné est marqué de manière adéquate dans l'éventail d'embranchements ou est supprimé de l'éventail d'embranchements.

7. Procédé selon l'une des revendications précédentes, dans lequel sont déterminés, pour une transmission répartie, les chemins restants qui se situent dans une marge de tolérance prédéterminée pour ce qui est de leur largeur de bande, de leur éloignement par rapport au noeud de sortie, de leurs coûts et/ou de leur utilisation momentanée.

8. Procédé selon l'une des revendications précédentes, dans lequel la répartition des flux de trafic est effectuée compte tenu de l'utilisation respective des chemins restants appropriés et/ou du volume respective des fractions de flux de trafic déjà transmises aux différents chemins restants.

9. Procédé selon la revendication 8, dans lequel il est fait appel, pour déterminer les fractions de flux de trafic, à la longueur des paquets de données respectivement transmis.

10. Procédé selon l'une des revendications précédentes, dans lequel les classes de trafic affectées d'une priorité sont transmises dans les noeuds de transmission de manière strictement priorisée.

11. Procédé selon l'une des revendications précédentes, dans lequel les flux de trafic affectés d'une priorité sont transmis de manière répartie.

12. Procédé selon l'une des revendications précédentes, dans lequel les deux contrôles d'admissibilité sont effectués indépendamment l'un de l'autre et le flux de trafic vérifié n'est autorisé à être transmis que si le résultat des deux contrôles d'admissibilité est positif.

13. Procédé selon l'une des revendications précédentes, dans lequel il est surveillé si les flux de trafic affectés d'une priorité respectent au moins un paramètre de trafic prédéterminé.

14. Procédé selon la revendication 13, dans lequel sont tolérés des dépassements du paramètre de trafic qui sont homogénéisés de manière appropriée par la répartition du trafic.

15. Procédé selon l'une des revendications 13 ou 14, dans lequel la fraction de trafic qui dépasse le paramètre de trafic est, en cas de dépassements du paramètre de trafic qui ne sont pas homogénéisés de manière appropriée par la répartition du trafic, transmise sans priorité.

16. Procédé selon l'une des revendications 13 à 15, dans lequel il est vérifié, au moins pour une partie des ports des noeuds d'accès via lesquels des flux de trafic affectés d'une priorité sont transmis vers le réseau de communication, si au moins une limite globale de ce qui peut être transmis au maximum vers le réseau de communication est respectée.

17. Procédé selon l'une des revendications 13 à 16, dans lequel il est vérifié, au moins pour une partie des flux de trafic, individuellement pour chaque flux de trafic, si le paramètre de trafic prédéterminé est respecté.

18. Procédé selon l'une des revendications précédentes, dans lequel est reconstitué, au moins pour les flux de trafic transmis de manière répartie, l'ordre de succession initial de ceux-ci tel qu'il se présentait avant leur transmission dans le réseau de communication, et ce, au moins pour une partie des noeuds de sortie à l'aide d'une fonction de reséquencement (RF) respectivement associée.

19. Réseau de communication (100, 200, 300), comprenant des moyens qui sont aménagés pour exécuter toutes les étapes d'un procédé selon l'une des revendications précédentes relatives au procédé.

20. Dispositif comprenant
- des moyens qui sont aménagés pour exécuter celles des étapes d'un procédé selon l'une des revendications précédentes relatives au procédé qui sont provoquées par le dispositif,
- des moyens qui sont aménagés pour exécuter des interactions, imposées par le procédé, du dispositif avec d'autres dispositifs qui exécutent les étapes restantes du procédé.

21. Dispositif selon la revendication précédente, lequel se présente sous la forme d'un produit de programme informatique et dont les moyens se présentent sous la forme de codes de programmes qui sont exécutés par au moins un processeur pour exécuter le procédé.
